# EUROPÄISCHE PATENTANMELDUNG

(11) **EP 0 775 650 A1**
(43) Veröffentlichungstag der Anmeldung: **28.05.1997**
(21) Anmeldenummer: 95118512.3
(22) Anmeldetag: 24.11.1995
(51) Int. Cl.: B65G 47/52, B65G 47/82

(54) **Fördersystem, insbesondere für Materialträger für den labormedizinischen Einsatz**

(71) Anmelder: von Froreich, André, Dr., 21149 Hamburg (DE)
(72) Erfinder: von Froreich, André, Dr., 21149 Hamburg (DE)
(74) Vertreter: von Raffay, Vincenz, Dipl.-Ing.

(57) **Zusammenfassung**

Das Fördersystem besteht aus zwei nebeneinander angeordneten Transportstrecken (1 und 2), die jeweils durch zwei endlose, motorisch angetriebene, im Transportbereich parallel gleichsinnig in einer waagerechten Ebene geführte Förderriemen (4,5) gebildet sind. Es ist eine Weiche vorgesehen, die der Überführung der Materialträger von der einen auf die andere Transportstrecke dient. Damit diese Weiche auf der freien Seite derjenigen Transportstrecke (2) angeordnet werden kann, auf die der ausgewählte Materialträger (3) überführt werden soll, ist die Weiche als Ziehweiche mit einer Ziehplatte (6) zur Verbindung mit dem ausgewählten Materialträger ausgebildet. Die Ziehplatte mit dem Antrieb für ihre Hin- und Herbewegung ist angrenzend an die Transportstrecke (2) angeordnet, auf die der ausgewählte Materialträger von der Transportstrecke (1) gezogen werden soll. In vorteilhafter Weise erfolgt die Verbindung zwischen Ziehplatte (6) und Materialträger (3) mit Hilfe einer Magnetkupplung.

## Beschreibung

Die Erfindung betrifft ein Fördersystem nach dem Oberbegriff des Anspruches 1.

Ein derartiges Fördersystem ist Gegenstand eines älteren Vorschlages nach der europäischen Patentanmeldung 95112812.3 vom 16.08.1995.

Die in diesem älteren Vorschlag beschriebene Weiche weist einen Querschieber auf, der durch einen Exzenterantrieb quer zur Förderrichtung hin- und herbewegbar ist, um die Materialträger von der einen Transportstrecke auf die andere zu schieben. Der Querschieber befindet sich mit seinem Exzenterantrieb auf der freien Seite derjenigen Transportstrecke, von der der ausgewählte Materialträger auf die andere Transportstrecke verschoben werden soll. Es gibt nun Anwendungsfälle, bei denen auf dieser Seite, d.h. neben der genannten Transportstrecke, kein Platz für den Exzenterantrieb ist. Dieses ist beispielsweise der Fall, wenn Transportbahnen, Handhabungsgeräte oder Analyseautomaten direkt neben dieser Transportstrecke angeordnet werden müssen.

Der Erfindung liegt nun die Aufgabe zugrunde, ein Fördersystem nach dem Oberbegriff des Anspruches 1 und damit auch nach dem älteren Vorschlag zu schaffen, bei dem die wesentlichen Teile der Weiche dort angeordnet werden, wo Platz ist.

Diese Aufgabe wird grundsätzlich durch das Kennzeichen des Anspruches 1 gelöst.

Grundsätzlich ist es möglich, die beiden nebeneinander angeordneten Transportstrecken entweder parallel zueinander (Anspruch 2) oder rechtwinklig zueinander (Anspruch 3) anzuordnen.

Insbesondere eignet sich das Transportsystem mit Ziehweiche bei einem solchen System, wie es in Anspruch 4 definiert und bereits in dem älteren Vorschlag beschrieben ist.

In vorteilhafter Weise wird die Verbindung zwischen Ziehplatte und Materialträger durch eine Magnetkupplung gebildet (Anspruch 5), die wiederum durch einen Permanentmagneten und eine mit diesem zusammenarbeitende ferromagnetische Einlage gebildet werden kann (Anspruch 6).

Bei Verwendung eines Permanentmagneten ist es von Vorteil, daß der Hub der Ziehplatte größer ist als die Wegstrecke, die der Materialträger von der einen auf die andere Transportstrecke zurücklegt (Anspruch 7). Durch diesen Überhub wird sichergestellt, daß beim Ankuppeln die Geschwindigkeit der Ziehplatte praktisch gleich Null ist, beim Trennen die Bewegung aber noch fortgesetzt wird. Hierdurch wird die erwünschte Trennung mit großer Sicherheit erreicht.

Die Magnetkupplung kann auch durch einen Elektromagneten (Anspruch 8). gebildet werden.

Erfindungsgemäß befinden sich die wesentlichen Bauteile, insbesondere der Exzenterantrieb (Anspruch 9) der Weiche, neben der Transportstrecke, auf die der ausgewählte Materialträger überführt werden soll. Diese geschieht nicht durch Schieben des Materialträgers, sondern dadurch, daß der ausgewählte Materialträger von der ersten Transportstrecke auf die zweite Transportstrecke gezogen wird. Die Verwendung einer Magnetkupplung stellt sicher, daß die Kupplung oder Verbindung zwischen Ziehplatte und Materialträger leicht und exakt zu trennen ist, wenn der Materialträger die gewünschte Stellung auf der zweiten Transportstrecke erreicht hat. Der Materialträger wird gegen die seitliche Begrenzung der zweiten Förderstrecke gezogen, d.h. er gelangt dort zur Anlage. Die Ziehplatte setzt entweder ihre Bewegung fort und die Verbindung mit dem Materialträger wird bei Verwendung eines Permanentmagneten durch den Überhub (Anspruch 7) getrennt oder, wenn ein Elektromagnet vewendet wird (Anspruch 8), wird dieser abgeschaltet.

Im folgenden wird die Erfindung unter Hinweis auf die Zeichnung anhand eines Ausführungsbeispieles näher erläutert:

Es zeigt:
- Fig. 1: eine perspektivische Draufsicht auf eine Ausführungsform mit einem Ausschnitt aus einem Fördersystem mit einer Ziehweiche;
- Fig. 2: eine Draufsicht auf die Darstellung der Fig. 1 in einer Stellung, in der die Ziehplatte bereits die Verbindung mit dem zu überführenden Materialträger eingegangen ist;
- Fig. 3: eine der Fig. 2 entsprechenden Draufsicht, jedoch nach Überführung und Trennung der Ziehplatte von dem überführten Materialträger;
- Fig. 4: eine perspektivische Draufsicht auf die wesentlichen Bauteile der Ziehweiche; und
- Fig. 5: eine perspektivische Ansicht eines Materialträgers.

Grundsätzlich ist das Fördersystem nach der Erfindung so aufgebaut, wie dasjenige nach dem älteren Vorschlag entsprechend europäischer Patentanmeldung 95112812.3. Aus diesem Grund werden im folgenden nur die wesentlichen Unterschiede erläutert.

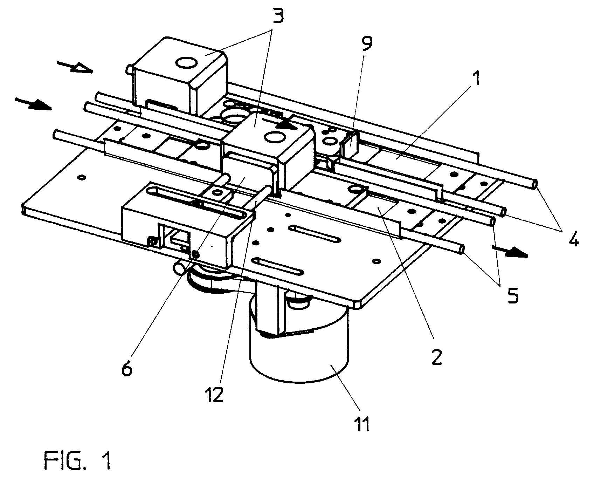

In Fig. 1 sind zwei nebeneinanderliegende Förderstrecken 1 und 2 dargestellt, die durch die Förderriemen 4 und 5 gebildet werden. Die Transportrichtung ist durch Pfeile gekennzeichnet. Es sind zwei Materialträger 3 veranschaulicht, von denen der eine, der sich auf der Transportstrecke 2 befindet, gerade von der Transportstrecke 1 überführt wurde. Nach oben abgewinkelte Teile 10 neben den Förderriemen dienen der Führung der Materialträger 3.

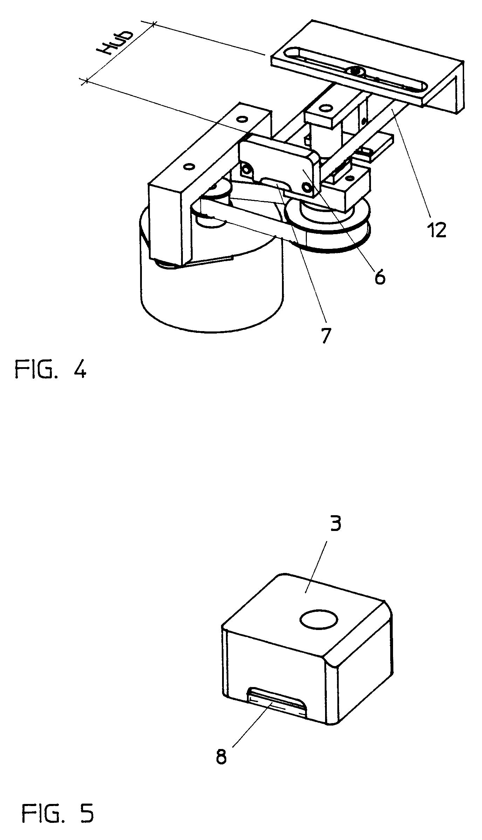

Da neben der Transportstrecke 1 ein Platz zur Anordnung einer Weichenkonstruktion, so wie sie in dem älteren Vorschlag beschrieben ist, nicht vorhanden ist, sind die wesentlichen Bauteile der Weiche auf der gegenüberliegenden Seite angeordnet. Die Ziehplatte 6 ist mit einem Permanentmagneten 7 (Fig. 4) versehen, der mit einer ferromagnetischen Einlage 8 an jedem Materialträger 3 (Fig. 5) zusammenarbeitet.

Die dargestellte Weiche, die als Ziehweiche ausgebildet ist, ist so aufgebaut, wie diejenige Weiche des älteren Vorschlages, die einen festen Anschlag auf der Transportstrecke 1 aufweist, von der die Materialträger zu überführen sind. Dieser feste Anschlag ist mit 9 bezeichnet. Im Rahmen der Erfindung ist es aber auch möglich, anstelle des festen Anschlages einen auf- und abbewegbaren Sperrschieber vorzusehen, so wie er ebenfalls mit der anderen Weichenkonstruktion in dem älteren Vorschlag beschrieben ist.

Der Exzenterantrieb weist einen Motor 11 auf, der den Exzentermechanismus antreibt. Diese Bauteile sind unterhalb der Förderebene angeordnet. Der Exzentermechanismus ist über ein Gestänge 12 mit der Ziehplatte 6 verbunden. Der Exzentermechanismus sorgt dafür, daß die Drehbewegung des Motors 11 in eine Hin- und Herbewegung der Ziehplatte 6 umgewandelt wird.

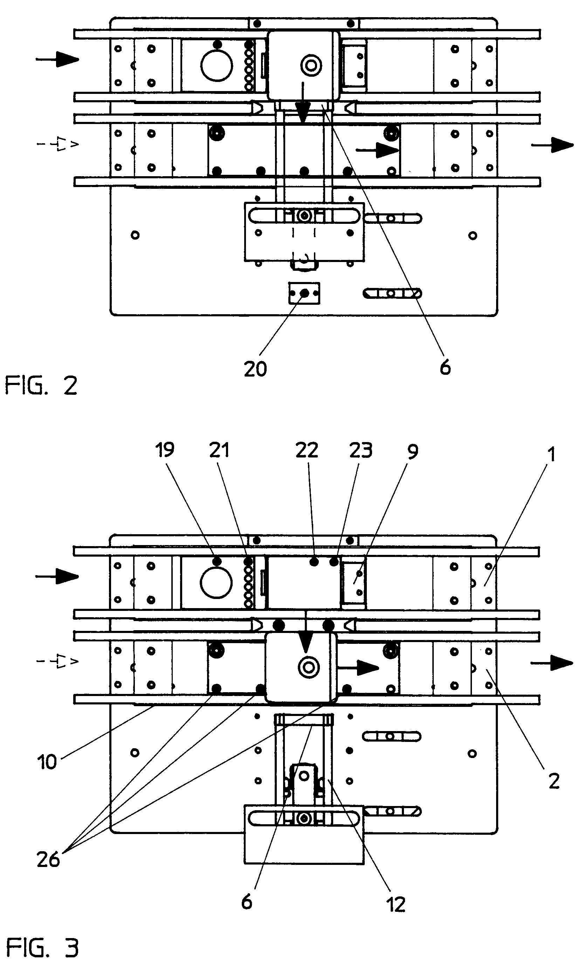

Weiterhin sind Initiatoren 19, 21, 22, 23 und 26 in Fig. 3 dargestellt, die denjenigen des älteren Vorschlages entsprechen und ebenso arbeiten. Wenn ein Materialträger 3 auf der ersten Transportsstrecke 1 gegen den Anschlag 9 gelaufen ist, wird dieses durch den Initiator 23 registriert. Die Initiatoren 26 signalisieren, ob der Arbeitsraum auf der Transportstrecke 2 frei ist. Ist dieses der Fall, wird der Exzenterantrieb gestartet und die Ziehplatte 6 wird gegen den Materialträger 3 auf der Transportstrecke 1 bewegt. Dort erfolgt die Verbindung mit Hilfe der Magnetkupplung. Ist diese Kupplung hergestellt, zieht die Ziehplatte, ausgelöst durch eine weitere Drehbwegung des Exzenterantriebes, diesen ausgewählten Materialträger auf die Transportstrecke 2. Dieses wird durch die Initiatoren 26 erkannt. Hierbei gelangt der Materialträger an den abgewinkelten Teilen 10 der Transportstrecke 2 zur Anlage. Die Öffnung in der Seitenwand des Teils 10, durch die die Ziehplatte hier hindurchbewegbar ist, ist kleiner als die Breite des Materialträgers. Die Magnetkupplung wird zwangsläufig dadurch gelöst, daß sich bei Verwendung eines Permanentmagneten 7 die Ziehplatte über die erreichte und erwünschte Stellung des Materialträgers auf der Transportstrecke 2 ihre Hubbewegung (Überhub) fortsetzt, wodurch die Verbindung zwischen dem Permanentmagneten und der Einlage 8 sicher getrennt wird. Diese Stellung ist in Fig. 3 gezeigt. Der Initiator 20 des Exzenterantriebes stellt die volle Exzenterdrehung fest und schaltet den Antrieb aus. Sobald der magnetische Kraftschluß zwischen dem Permanentmagneten 7 und der Einlage 8 abgerissen ist, ist der Materialträger frei und wird auf der Transportstrecke 2 weitertransportiert.

In der Zeichnung sind zwei parallel zueinander angeordnete Transportstrecken 1 und 2 dargestellt. Es ist ohne weiteres einzusehen, daß anstelle dieser parallel zueinander angeordneten und sich bewegenden Transportstrecken auch rechtwinklig zueinander angeordnete Transportstrecken einsetzbar sind. Eine zeichnerische Darstellung einer solchen Transportstreckenanordnung liegt nicht vor.

Die Magnetkupplung kann auch durch einen Elektromagneten gebildet werden, der dann abgeschaltet wird, wenn die Verbindung zwischen der Ziehplatte und dem Materialträger gelöst werden soll.

Grundsätzlich sind im Rahmen der Erfindung die unterschiedlichsten Möglichkeiten für die Verbindung zwischen Ziehplatte und Materialträger denkbar. Beispielsweise kann auch eine Vakuumkupplung oder eine andere Art der lösbaren Verbindung zum Einsatz kommen.

## Patentansprüche

1. Fördersystem, insbesondere für Materialträger (3) für den labormedizinischen Einsatz mit zwei nebeneinander angeordneten Transportstrecken (1,2), und einer Weiche zur Überführung der Materialträger (3) von der einen auf die andere Transportstrecke, dadurch gekennzeichnet, daß die Weiche als Ziehweiche mit einer Ziehplatte (6) zur Verbindung mit dem ausgewählten Materialträger (3) ausgebildet ist, die angrenzend an die Transportstrecke (2) angeordnet ist, auf die der auswählte Materialträger (3) von der anderen Transportstrecke (1) gezogen wird.

2. Fördersystem nach Anspruch 1, dadurch gekennzeichnet, daß die beiden Transportstrecken (1 und 2) parallel zueinander angeordnet sind.

3. Fördersystem nach Anspruch 1, dadurch gekennzeichnet, daß die beiden Transportstrecken rechtwinklig zueinander angeordnet sind.

4. Fördersystem nach Anspruch 1, 2 oder 3, dadurch gekennzeichnet, daß die Transportstrecken (1,2) jeweils durch zwei endlose, motorisch angetriebene, im Transportbereich parallel und gleichsinnig in einer waagerechten Ebene geführten Förderriemen (4,5) gebildet sind, die auf in Transportrichtung verlaufenden, nach oben abgewinkelten Teilen geführt sind, und die am Anfang und am Ende um Umlenkrollen laufen.

5. Fördersystem nach einem der Ansprüche 1 bis 4, dadurch gekennzeichnet, daß die Verbindung zwischen Ziehplatte (6) und Materialträger (3) als Magnetkupplung ausgebildet ist.

6. Fördersystem nach Anspruch 4, dadurch gekennzeichnet, daß die Magnetkupplung durch einen Permanentmagneten (7) an der Ziehplatte (6) und eine ferromagnetische Einlage (8) an dem Materialträger (3) gebildet ist.

7. Fördersystem nach Anspruch 6, dadurch gekennzeichnet, daß der Hub der Ziehplatte (6) größer ist als die Wegstrecke, die der Materialträger (3) von der einen auf die andere Transportstrecke (1,2) zurücklegt.

8. Fördersystem nach Anspruch 5, dadurch gekennzeichnet, daß die Magnetkupplung durch einen Elektromagneten gebildet ist.

9. Fördersystem nach Anspruch 1, 2, 3 oder 4, dadurch gekennzeichnet, daß die Verbindung zwischen Ziehplatte (6) und Materialträger durch eine Vakuumkupplung gebildet ist.

10. Fördersystem nach einem der Ansprüche 5 bis 9, dadurch gekennzeichnet, daß die Ziehplatte (6) durch einen Exzenterantrieb (11,12) hin- und herbewegbar ist.
